# EUROPEAN PATENT SPECIFICATION

(11) **EP 2 281 673 B1**
(45) Date of publication and mention of the grant of the patent: **21.12.2011**
(21) Application number: 10171737.9
(22) Date of filing: 03.08.2010
(51) Int. Cl.: B29C 45/00

(54) **Injection mould for plastic containers with pivotal handle**
Spritzgussform für Behälter aus Kunststoffmaterial mit Drehgriff
Moule d'injection pour récipients en plastique avec poignée pivotante

(30) Priority: 07.08.2009 IT MI20091448
(43) Date of publication of application: 09.02.2011
(73) Proprietor: Casone S.p.A., 43015 Noceto (IT)
(72) Inventor: Adami, Franco, 43015, Noceto (IT)
(74) Representative: Coloberti, Luigi

(56) References cited:
- EP-A1- 1 029 796
- EP-A1- 1 245 371
- US-A- 4 632 357
- US-B1- 6 234 782

## Description

### BACKGROUND OF THE INVENTION

The present invention relates to an injection mould assembly for plastic materials, and in particular is directed to a mould assembly and a method suitable for producing a container, such as a bucket, pail or the like of plastic material, provided with two lateral ears for pivotally engaging a carrying handle, said lateral ears being in the form of handgripping lugs, wherein the mould is conformed to enable the container and the handle to be conjointly moulded, and to carry out the assembling by automatically introducing the pivot pins of the handle into holes of the lateral ears, at the opening of the mould, to demold the container and the handle in an assembled state.

### BACKGROUND ART

Moulds for co-moulding containers of plastic material and the relative handle, as well as suitable for enabling the same handle to be automatically assembled, are known for example from US-A-4.632.357, US-A-6.234.782, EP-A-1.245.371 and EP-A-1.029.796.

In particular, US-A-4.632.357 provides a first mould half conformed with a circular cavity for moulding the container, and a second mould half, movable with respect to the previous mould half, provided with a central core suitable for being introduced into the cavity of the first mould half, and two slides movable in a plane orthogonal to the longitudinal axis of the mould. The two slides exhibit semicircular frontal surfaces that conform to a circular strip at the upper rim of the container; furthermore, one of the two slides exhibits a semicircular impression, that cooperates with a corresponding semicircular impression of the first mould half, in order to form an injection chamber for the handle, co-axially arranged around the injection chamber of the container.

According to this document, the handle is pivotally engaged with two simple lateral ears and is initially moulded with the pivot pins of the handle directly connected to said container by a weakened breakage portion. The mould, in addition to exhibit a complex structure required for co-moulding containers with the handle being initially connected and directly pivotally engaged with the container self, does not enable, for containers of great sizes designed to contain remarkable loads, a secure and appropriate pivotal engagement with the lateral ears; furthermore, the manual hold of the container, for transporting and/or clearing purpose thereof, may result uncertain or posing troubles.

US-A-6.234.782 and EP-A-1.245.371 provide, in turn, a mould for injection co-moulding a container and a relative pivotally engaged handle, wherein the handle is moulded within an injection chamber, that is set apart from the injection chamber of the container, and wherein the handle exhibits pivotally engaging pins that are automatically introduced into holes, once again, within simple lateral ears of the container, at the opening of the mould before the removal of the moulded container. EP-A-1.245.371 discloses a mould in accordance with the preamble of claim 1.

When, on the one hand, these moulds enable the handle to be more safely pivotally engaged with the two ears of the container, on the other hand the same moulds imply once again a complex structure, requiring movable members for producing the pivotally engaging holes for the handle; furthermore, holding the container results once again uncertain and unsafe in the case of container of great sizes, owing to the absence of lateral holding lugs.

Lastly EP-A-1.029.796 relates to a stackable container provided with means to prevent the stacked containers from twisting one in relation to another.

### OBJECTS OF THE INVENTION

The main object of the present invention is to provide an injection mould for making containers of plastic material, which containers, can be provided with a double system for manual holding, wherein the handle is co-moulded with the container, within separate injection chambers, and is then automatically assembled by pivotally engaging said handle with two lateral hollow ears, at diametrically opposite positions, along an upper strip of the peripheral wall of the container.

A further object of the invention is to provide an injection mould of the above defined type, wherein one of the two mould halves is devoid of any movable portion, is provided with one or more separate supplying points for the plastic material into the injection chambers of the container and the handle; and wherein the other mould half has been remarkably simplified by removing movements and movable portions previously required for achieving the pivotally engagement of the handle with the container.

### SUMMARY OF THE INVENTION

All above can be obtained by a mould according to claim 1.

In particular, according to the present invention, an injection mould assembly has been provided suitable for producing a container of plastic material comprising a bottom wall and a peripheral wall having an upper band provided with two lateral hollow ears, or downwardly open lugs, at diametrically opposed positions, each of said ears having an external wall with a hole for the introduction of a pivot pin of a handle, the mould comprising:
a first mould half provided with a circular cavity that extends along a longitudinal axis of the mould, said cavity conforming to the bottom wall and the peripheral wall of the container;
a second mould half, relatively movable with respect to the previous mould half in the direction of the longitudinal axis of the mould, between a closed and an open position of the mould;
wherein the second mould half comprises a central core suitable for penetrating into the circular cavity of the first mould half to form a first injection chamber for the container; first and second slides, movable in a plane orthogonal to the longitudinal axis of the mould, said slides having shaped front surfaces conforming to the upper band and the lateral ears of the container;
wherein the first mould half and one of the slides comprise opposite impressions defining a second injection chamber for the handle and the pivot pins, co-axially arranged with respect to the first injection chamber for the container;
and means for assembling the handle by automatically introducing the pivot pins into the holes of the lateral ears,
characterized in that
the first mould half comprises two fixed inserts, protruding from a recessed surface, at diametrically opposite positions,
each insert cooperates with shaped cavities of the slides to define moulding impression for the ears, said moulding impression being in communication with the injection chamber for the container;
in that one of the slides, at both ends of frontal surface, comprises a radially oriented cylindrical member cooperating with a fixed insert of the first mould half to form for the engagement of the pivot pin of the handle with the lateral ears; and
in that the mould comprises control means for controlling the movement of the slides, and causing each of the cylindrical members to be axially removed from one side of the hole by elastic deformation of the outer wall of the ear and to align each pivot pin to the hole of a corresponding ear during the moving direction of said one slide, orthogonally to the longitudinal axis of the mould.

According to the invention a method has been also provided for injection moulding of a container in plastic material having bottom and peripheral walls, and provided at each end with a inwardly oriented pivot pin having an enlarged head snap-engaging an opening in a lateral wall of an ear, in opposite positions of the container peripheral wall, by an injection mould assembly according to the present invention, the injection moulding comprises the steps of:
conjointly moulding the container and the pivotable handle in the coaxially arranged injection chambers, keeping the pivot pins and the holes of the lateral wall of the ears in spaced apart positions;
opening the mould and backward moving said one slide to disengage and remove the cylindrical members from a side of the holes in the lateral wall of the ears by elastically deforming said lateral wall;
aligning each pivot pin of the handle by the backward movement of said one slide to a corresponding hole of the lateral ear walls; and
snap-engaging each pivot pin into the hole of the lateral wall of a corresponding ear, to pivotally connect the handle to the lateral ears during opening step and removal of the container in an assembled condition from the mould.

### BRIEF DESCRIPTION OF DRAWINGS

These and further features of an injection mould for plastic materials according to the present invention, will better result from the following description, with reference to the example of the enclosed drawings, wherein:
Fig. 1 is a perspective view of a container of plastic material, obtained by an injection mould according to the invention;
Fig. 2 is an enlarged cross-sectional view, showing the pivotal engagement of the handle with a lateral ear of the container;
Fig. 3 is a longitudinal cross-sectional view of the mould, in a closed condition;
Fig. 4 is a perspective view of a first mould half of Fig. 3, in upside-down condition with respect to Fig. 3;
Fig. 5 is a perspective view of a second mould half of Fig. 3, with the moulded container;
Fig. 6 shows an enlarged detail of Fig. 3;
Fig. 7 shows an enlarged detail of two slides, in closed condition, with the cylindrical member for forming the hole in a lateral ear of the container, for engaging a pivot pin of the handle;
Fig. 8 is a view according to line 8-8 of Fig. 7;
Fig. 9 is a view like to Fig. 7, with the two slides in an open condition, during the removal of the cylindrical member from the hole of the ear for the pivot pin of the handle;
Fig. 10, 11 and 12 show enlarged details of the mould half of Fig. 5, during different steps for automatically assembling and pivotally engaging the handle to the container.

### DETAILED DESCRIPTION OF THE INVENTION

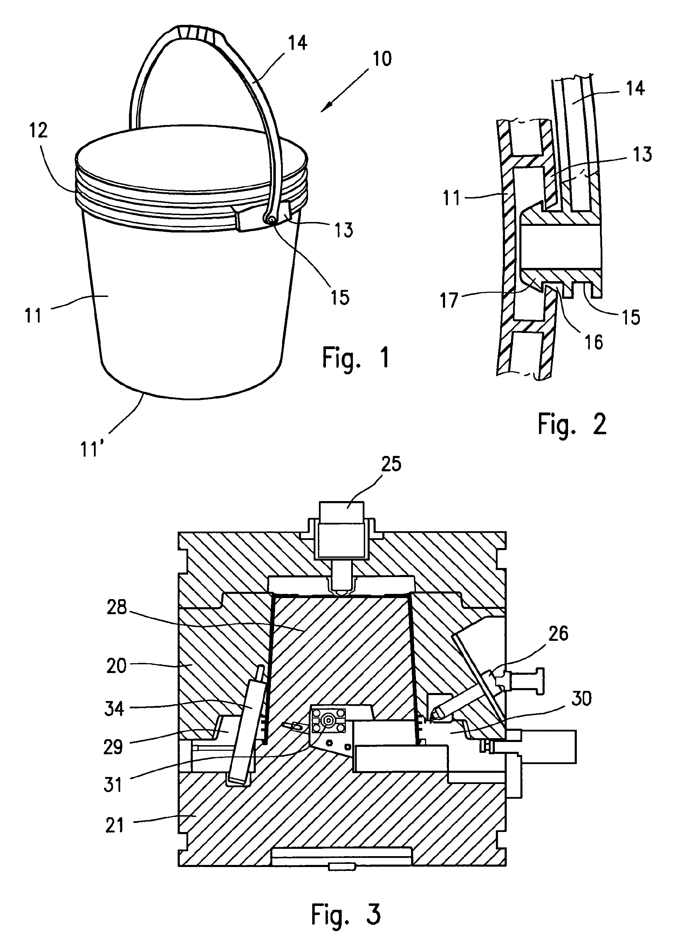

Fig. 1 shows a generic container 10 of plastic material, such as bucket, a pail or the like, comprising a peripheral wall 11 and a bottom wall 11'; the peripheral wall 11, near the upper rim thereof, having a band 12 provided with angular ribs and two literal ears 13 at diametrically opposed positions. The two ears 13 are in form of downwardly open hollow lugs having an outer wall to pivotally engage a semicircular handle 14, said handle 14 being obtained by injection moulding into the same mould, at the same time of the container 10; at each of its own ends, the handle 14 is provided with a tubular pivot pin 15 having an enlarged head that snap-engages into a hole 16 in the outer wall of the ear 13, said tubular pin 15 being axially retained by a chamfered edge 17 of the hole 16. In the case that the two lateral ears 13 are in form of hollow lugs having a side wall, the container 10 can be manually taken up whether by means of the two lateral lugs 13 or by means of the handle 14.

According to the present invention, both the container 10 and the handle 11 are co-moulded in separate injection chambers by means of the injection mould assembly of Fig. 3; thus, the mould is further conformed so as to enable the handle 14 to be also automatically assembled during the opening movement of the mould, by carrying out the alignment of the pivot pins 15 of the handle 14, with the holes 16 of the lateral ears 13, by means of suitable sequential movements of parts composing the mould.

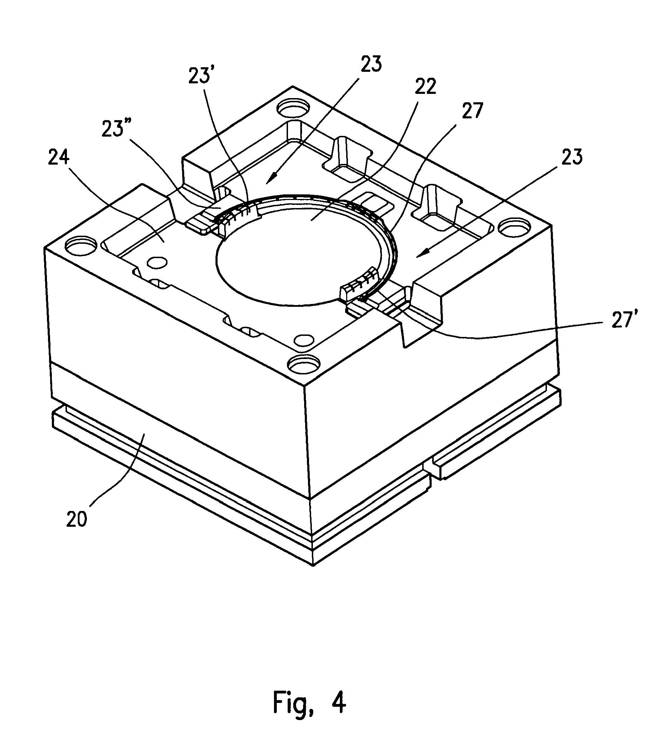

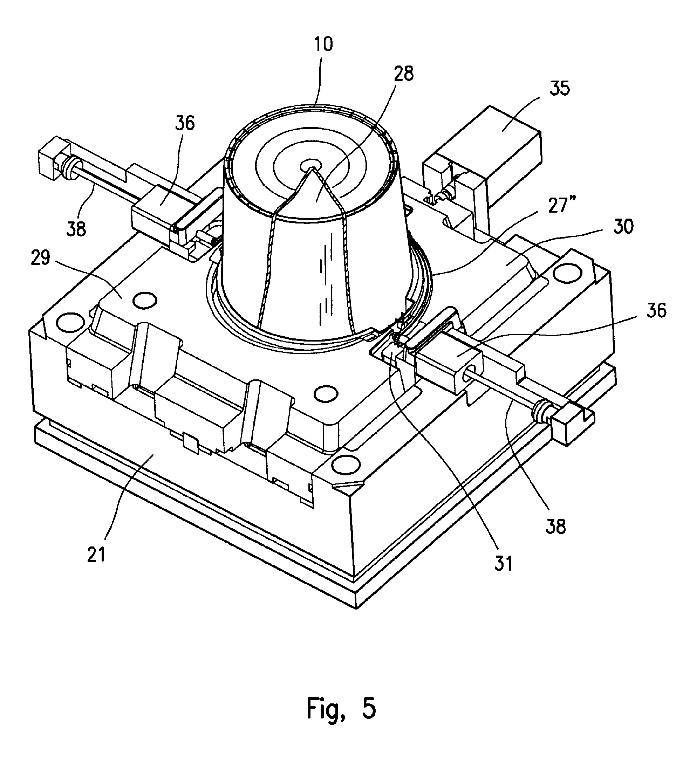

Fig. 3 shows a cross-sectional view in the closed condition of the mould, whereas Figures 4 and 5 show perspective views of the two mould halves, wherein the mould half of Fig. 4 is shown in an upside-down condition with respect to Fig. 3.

Then, the mould comprises a first mould half 20, or stationary mould half, and a second mould half 21, movable with respect to the previous mould half 20 in the direction of their longitudinal axis. The first mould half 20 is conformed with a circular cavity 22 comprising the bottom wall 11' and a portion of the peripheral wall 11 of the container, exception for the upper band 12.

The mould half 20 is provided as well, at positions diametrically opposed with respect to the central cavity 22, with two fixed inserts 23 for forming the lug ears 13, which fixed inserts 23 protrude with respect to the frontal surface 24, that matches in abutment with a corresponding frontal surface of the second mould half 21.

In the shown case, the stationary mould half 20 is provided as well with a first central injector 25, aligned with the longitudinal axis of the mould in order to supply melt plastic material into a first injection chamber of the container, and also comprises a second lateral injector 26 in order to supply melt plastic material into a second injection chamber for the handle 14, said handle 14 and said second injection chamber being of semicircular shape and arranged co-axially to the first injection chamber; however, the two injection chambers could be also fed by a single injector.

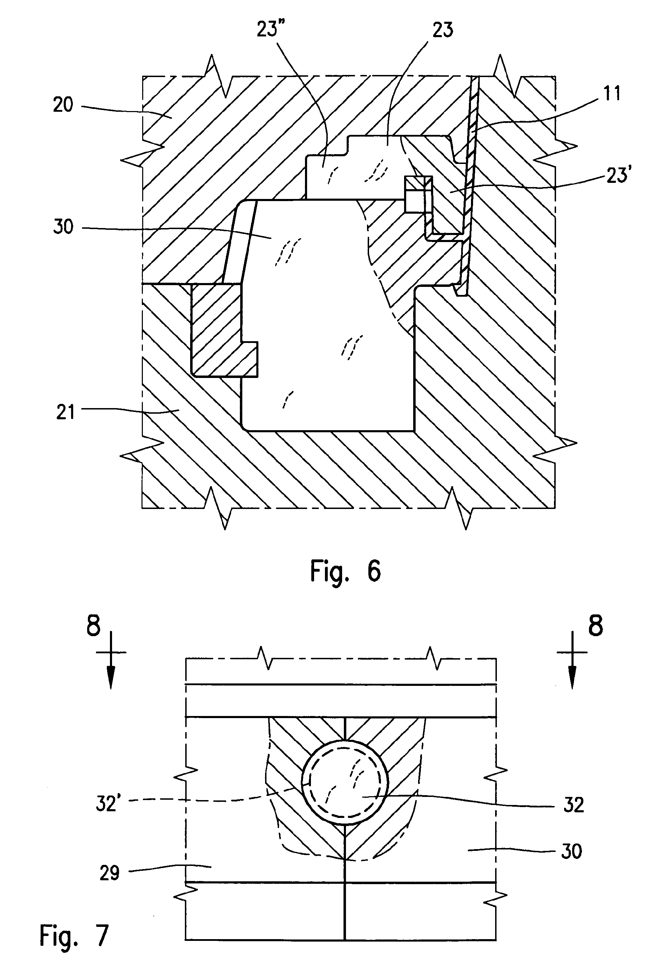

In particular, as shown in Figures 4 or 6, each fixed insert 23 comprises a radially internal portion 23', suitable for forming the cavity of the hollow ears or lugs 13 of the container, and a radially external portion 23". A recessed front surface 24 of the first mould half 20 is provided with an impression 27 for the handle 14 of the container, which impression 27 continues with an impression 27' in each external portion 23" of the inserts 23, to define the end portions and the pivot pins 15 of the handle 14.

Conversely, as shown in Figures 3 and 5 and in the details of Figures 7, 8 and 9, the second mould half 21, or movable mould half, comprises a central core 28 that conforms to the central cavity 22 of the first mould half 20 in order to define a first injection chamber for the container 10. The said second mould half 21 also comprises a first slide 29 and a second slide 30, Fig. 5; the two slides 29 and 30 are movable in a plane orthogonal to the longitudinal axis of the mould, between a closed condition and an open condition, as described below.

One of the slides, in particular the second slide 30 is provided with a semicircular impression 27" for the handle 14, corresponding to the semicircular impression 27 the first mould half 20; said second slide 30 also comprises, at two diametrically opposite positions, an axially movable insert 31 having an impression or moulding cavity for the handle corresponding to the impression or moulding cavity 27' of the fixed inserts 23 of the first mould half.

Each of the two slides 29 and 30 are provided with a semicircular frontal surface that conforms to the external surface of the upper band 12 of the container 10; each of said two slides 29 and 30 is provided also with opposite ends conformed with cavities suitable for delimiting the external wall of the lateral ears 13 or holding lugs of the container.

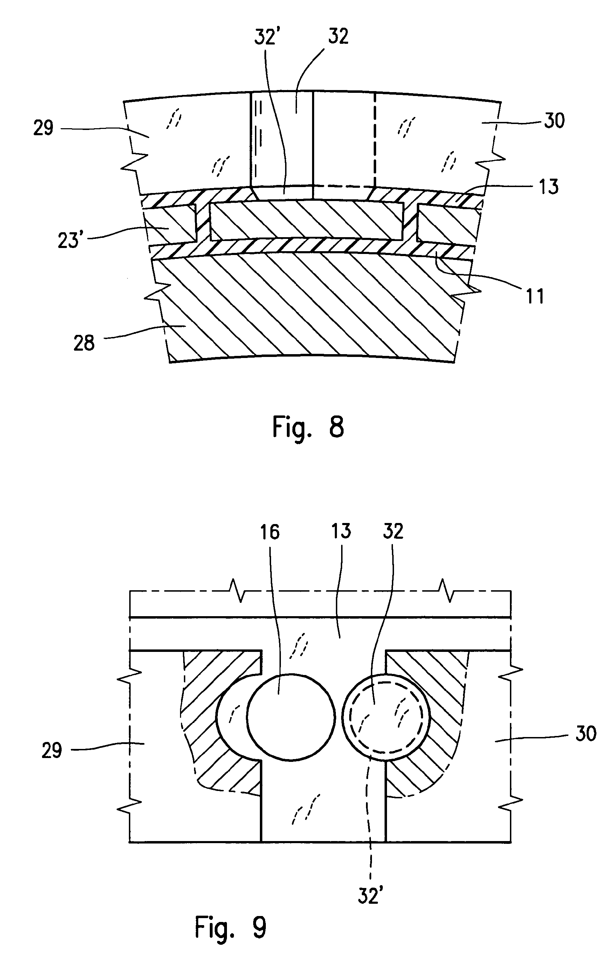

One of the slides, in particular the slide 30, at each of its own ends is provided with a radially oriented cylindrical member 32, conformed with an internal chamfered edge 32', in order to form, into a corresponding lateral ear 13, the engaging hole 16 for a pivot pin of the handle 14, in the closed condition of the mould, as shown in the details of Figures 8 and 9. The cylindrical member 32 for forming the hole 16 laterally protrudes, by half of its width, from the side end of the slide 30, and is housed within a semicircular seat 33 at the opposite side end of the other slide 29.

The two slides 29 and 30 can be moved, in any suitable manner, between an approached position, with the mould being in a closed condition for an injection step of the plastic material, as shown in the detail of Fig. 8, and spaced apart position or partially open mould, for disengaging the cylindrical members 32 from the holes 16 of the ears 13, by removing said cylindrical members 32 in the moving direction of the slide 30, as shown in Fig. 9, and also for aligning each pivot pin 15 of the moulded handle with a respective hole 16 of the ears 13.

In the shown case, one of the slides, for example the slide 29, is mechanically moved by means of slanting columns 34, of which only one column is shown in Fig. 3, said slanting columns 34 being fastened to the first mould half 20, whereas the other slide 30 is moved by an hydraulic actuator 35; alternatively, both slides 29 and 30 could be moved by respective hydraulic actuators, or mechanically by means of slanting columns 34, by exploiting the opening and closing movement of the two mould halves 20 and 21.

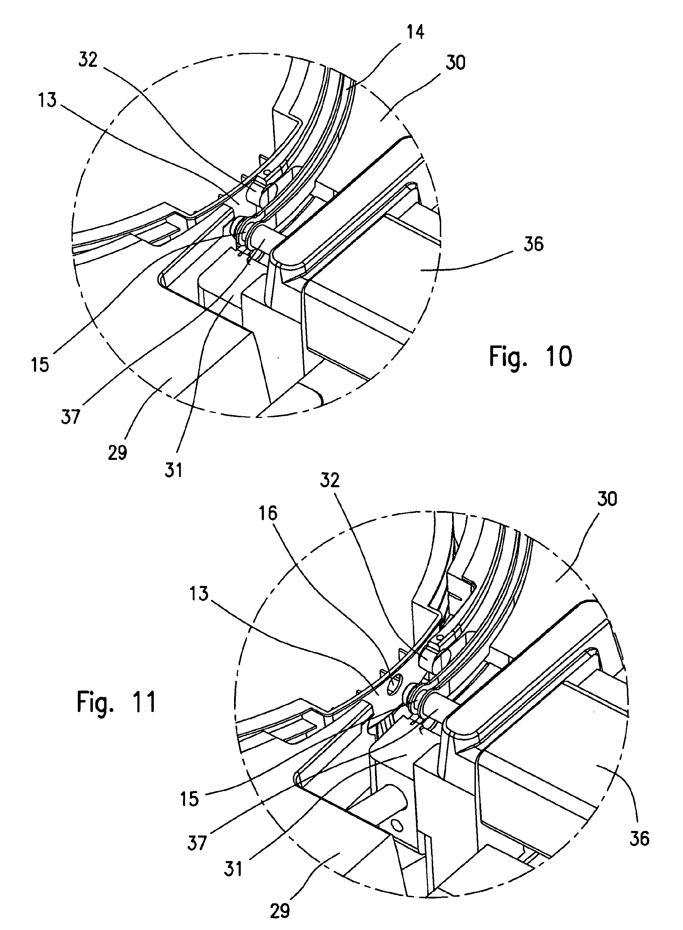

At radially aligned positions with respect to impressions for forming the two pivot pins 15 of the handle 14, two hydraulic cylinders 36, Fig. 5, are connected to the slide 30, each of the cylinders being provided with a tubular shaft 37 figure 10, co-axially sliding with respect to a rod 38 figure 5, for forming the tubular pin 15.

Hereinafter, the operative mode of the mould will be now described in the following, in the essential steps thereof, with reference to Figures 3, 8 and 9, as well as with reference to the enlarged details of Figures 10, 11 and 12, that show some main steps for automatically assembling the handle, and introducing the pivot pins 15 in the respective holes 16 of the two lateral hollow ears 13.

Always with reference to the example of the drawings, in the closed conditions of the mould, wherein the two slides 29 and 30 have been moved close in Figures 2 and 8, the plastic material, at the melt state, is fed into the injection chamber of the container 10 by the first injector 25; simultaneously said plastic material at the melt state is fed into the injection chamber of the handle 14 by the second injector 26.

The body of the container 10, the peripheral band 12 with the lateral ears 13, and the handle 14 with the tubular pivot pins 15 moulded around the ends of the guide rods 38, are simultaneously formed during the supply of the plastic material into the two injection chambers.

When the time needed for the plastic material to cool down and settle has elapsed, the mould is partially opened by moving away the movable mould half 21 from the stationary mould half 20; during this first opening movement of the mould, the slide 30 remains stationary, with the cylindrical members 32 into the holes 16 of the lateral wall of the ears 13, as shown in Fig. 8 and in the enlarged detail of Fig. 10. In these condition, as shown in the same Fig. 10, the handle 14 still results seated within the impression or moulding cavity of the slide 30, with each pin 15 fitted on the guide rod 38, in misaligned position with respect to the hole 16 for pivotally engaging the ear 13.

At this point, by exploiting the elastic deformation of the external wall in plastic material of the ear 13, the axial removal of the cylindrical member 32 from the hole 16 is at first produced by moving back also the second slide 30, in the direction of the arrow W of Fig. 9, causing said second slide 30 to stop in the position shown in Fig. 11; at the end of the back movement of the slide 30, the guide rod 38 with the pin 15 of the handle, and the tubular shaft 37 of the actuator 36 result axially aligned with the hole 16, as shown in the detail of Fig. 11. In the meanwhile, the inserts 31, driven by respective slanting columns, have been lowered, releasing the ends of the handle 14.

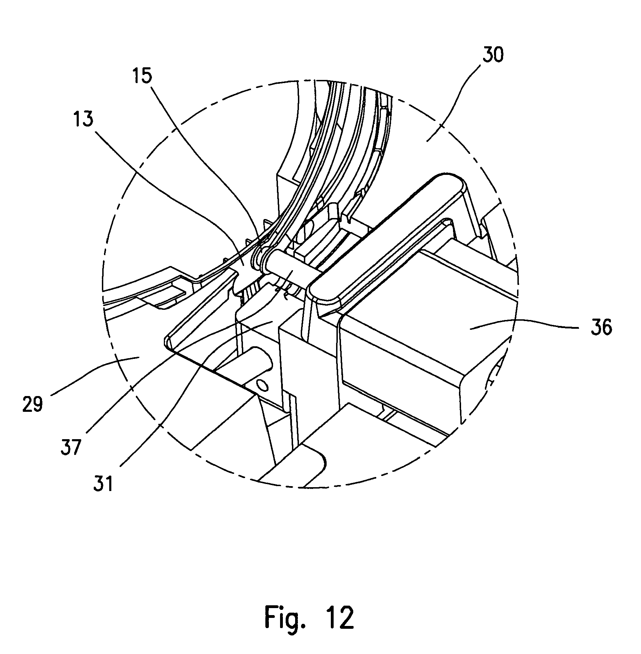

Once the pins 15 have been aligned to the respective holes 16 of the ears 13, rods actuated by respective pistons, not shown, raise and remove the handle 14 from the impression of the slide 30, Fig. 12. At this point, by means of the hydraulic cylinders 36, the automatic insertion of the pins 15 into the holes 16 of the lateral ears 13 is carried out, after which the tubular shaft 37 and the guide rod 38 are moved back, releasing the pins 15 by now inserted into the handle 14.

Once the mould assembly has been fully opened, the moulded container 10, with the already assembled handle, can now be removed from the mould half 21, said moulded container 10 being ejected for example with an air jet or by a suitable extractor. Once the necessary cleaning operations have been carried out, the mould can be used again for injection moulding a further container.

From all said and shown in the enclosed drawings, it then results that an injection mould is provided for containers of plastic material, provided with ears or lateral lugs and a semicircular handle pivotally engaged with the ears or said lugs, wherein container and handle are co-moulded in respective injection chambers that are separately fed, wherein the handle is automatically assembled during the opening step of the mould, and wherein the mould exhibits a simplified structure from which the presence was entirely removed of mostly of movable components, and respective actuators, for forming the ears or the lateral handgripping lugs with the pivotally engaging holes of the handle.

It is anyway intended that, all said and shown in the enclosed drawings was given for exemplifying purpose of the features of the mould, a preferred embodiment and an operative mode thereof; consequently, other modifications or variations can be given to the two mould halves, the slides and/or other structural and functional parts of the mould, without departing from the claims.

## Claims

1. An injection mould assembly suitable for producing a container (10) of plastic material, comprising a bottom wall (11') and a peripheral wall (11 ) having an upper band (12) provided with two lateral hollow ears or downwardly open lugs (13), at diametrically opposite positions, each of said ears or lugs (13) having an external wall with a hole (16) for the introduction of a pivot pin (15) of a handle (14), the mould comprising:
a first mould half (20) provided with a circular cavity (22) that extends along a longitudinal axis of the mould, said cavity (22) conforming to the bottom wall (11 ") and the peripheral wall (11) of the container (10);
a second mould half (21), relatively movable with respect to the previous mould half (20) in the direction of the longitudinal axis of the mould, between a closed and an open position of the mould;
wherein the second mould half (21) comprises a central core (28) suitable for penetrating into the circular cavity (22) of the first mould half (20) to form a first injection chamber for the container (10); and means (36, 37, 38) for assembling the handle (14) by automatically introducing the pivot pins (15) into the holes (16) of the lateral ears (13),
**characterized in that** the assembly comprises:
first and second slides (29, 30), movable in a plane orthogonal to the longitudinal axis of the mould, said slides (29, 30) having shaped front surfaces conforming to the upper band (12) and the lateral ears or lugs (13);
wherein the first mould half (20) and one of the slides (30) comprise opposite impressions (17) defining a second injection chamber for the handle (14) and the pivot pins (15), co-axially arranged with respect to the first injection chamber for the container (10);
the first mould half (20) comprises two fixed inserts (23), protruding from a recessed surface (24), at diametrically opposite positions,
each insert (23) cooperates with shaped cavies of the slides (29, 30) to define moulding impressions for the ears or lugs (13), said moulding impressions being in communication with the injection chamber for the container (10);
**in that**, one of the slides (30), at both ends of frontal surface, comprises radially oriented cylindrical members (32) cooperating with fixed inserts (23) of the first mould half (20) to form the holes (16) for the engagement of the pivot pins (15) with the lateral ears or lugs (13); and
**in that**, the mould comprises control means (34, 35) for controlling the movement of the slides (29, 30), and causing each of the cylindrical members (32) to be removed from one side of the hole (16) by elastic deformation of the outer wall of the ear or lug (13), and to align each pivot pin (15) to the hole (16) of a corresponding ear or lug (13) during the moving direction of said one slide (30), orthogonally to the longitudinal axis of the mould.

2. The injection mould according to claim 1, **characterized in that**, each fixed insert (23) of the first mould half (20) comprises a radially internal portion (23') that conforms to the cavity of the lateral ears or lugs (13), and a radially external portion (23") comprising a moulding impression for an end portion of a pivot pin (15) of the handle (14).

3. The injection mould according to claim 1, **characterized in that** the first mould half (20) comprises a first injector (25) for supplying melt plastic material into the first injection chamber for the container (10); and a second injector (26) for supplying the melt plastic material into the second injection chamber for the handle (14).

4. The injection mould according to claim 1, **characterized in that**, the first mould half (20) comprises a single injector for supplying the melt plastic material into the first and second injection chambers for the container (10) and the handle (14).

5. The injection mould according to claim 1, **characterized in that**, the means for controlling the movements of the slides (29, 30) and the removal of the cylindrical member (32) for forming the holes (16) in the lateral ears or lugs (13) comprises slanting guide columns (34) and/or hydraulic actuators (35).

6. The injection mould according to claim 1, **characterized in that**, the means (36, 37, 38) for the insertion of the pivot pins (15) of the handle (14) into the holes (16) of the lateral ears or lugs (13), are fastened to one of the slides (30), at positions laterally spaced apart from the cylindrical members (32).

7. The injection mould according to claim 6, **characterized in that**, said means (36, 37, 38) for the introduction of the pivot pins (15) into the holes (16) of the lateral ears or lugs (13) are supported by said one slide (30), in order to be moved each pin (15) between a first lateral position and a second position axially aligned with a corresponding hole (16) of the lateral ears or lugs (13) for the engagement with a pivot pin (15) of the handle (14).

## Patentansprüche

1. Ein Injektionsformaufbau passend für die Produktion von Plastikbehältern (10), umfassend eine Bodenwand (11') und eine Peripheriewand (11), die ein oberes Band (12) haben, ausgestattet mit zwei seitlichen hohlen Ohrmuscheln oder sinkenden offenen Anschlussklemmen (13), an diametral gegenüberliegenden Positionen, jede der besagten Ohrmuscheln (13) hat eine externe Wand mit einem Loch (16) für die Einführung eines Gelenkzapfens (15) von einem Griff (14), die Form umfasst:
Eine erste Formhälfte (20), die mit einer kreisförmigen Höhle (22), die sich longitudinal entlang der Achse der Form erweitert, ausgestattet ist, besagte Höhle (22) richtet sich zu der Bodenwand (11") und der Peripheriewand (11) des Behälters (10);
Eine zweite Formhälfte (21), die relativ beweglich in der Richtung der longitudinalen Achse der Form, im Vergleich zur vorherigen Formhälfte (20), zwischen einer geschlossenen und offenen Position, ist;
Wobei die zweite Formhälfte (21) einen zentralen Kern enthält (28), der passend für die Penetration in die kreisförmige Höhle (22) der ersten Formhälfte (20) ist, um eine erste Injektionskammer für die Behälter (10) zu formen; und Hilfsmittel (36, 37, 38) zum Montieren des Griffes (14) durch automatisches Einfügen der Gelenkzapfen (15) in die Löcher (16) der seitlichen Ohrmuscheln (13), **dadurch gekennzeichnet, dass** der Aufbau folgendes umfasst:
erster und zweiter Schieber (29, 30), beweglich in einer Fläche orthogonal zur longitudinalen Achse der Form, besagte Schieber (29, 30) haben geformte Vorderoberflächen, die sich zu dem oberen Band (12) oder den seitlichen Ohrmuscheln oder Anschlussklemmen (13) richten;
wobei die erste Formhälfte (20) und einer der Schieber (30) entgegengesetzte Eindrücke (17) haben, wodurch eine zweite Injektionskammer für den Griff (14) und die Gelenkzapfen (15) definiert wird, koaxial angeordnet mit Bezug zur ersten Injektionskammer der Behälter (10);
die erste Formhälfte (20) umfasst zwei fixierte Einsätze (23), die hervorstehend von der vertieften Fläche (24) an einer diametralen Position sich befinden,
jeder Einsatz (23) kooperiert mit den geformten Höhlen der Schieber(29, 30), um die Formeindrücke der Ohrmuscheln oder der Anschlussklemmen (13) zu definieren, besagte Formeindrücke sind in Kommunikation mit den Injektionskammern für die Behälter (10);
einer der Schieber (30), an beiden Enden der frontalen Fläche, umfasst radial angeordnete zylindrische Teile (32), kooperierend mit den fixierten Einsätzen (23) der ersten Formhälfte (20), um Löcher (16) für die Bindung des Gelenkzapfen (15) mit den seitlichen Ohrmuscheln oder Anschlussklemmen (13) zu formen;
die Form umfasst Kontrollmittel (34,35) für das Kontrollieren der Bewegung der Schieber (29, 30), wodurch jedes der zylindrischen Teile (32) von einer Seite des Loches (16) durch elastische Deformation der äußeren Wand der Ohrmuschel oder Anschlussklemme (13) entfernt wird, und wodurch jeder Gelenkzapfen (15) zu dem Loch (16) der korrespondierenden Ohrmuschel oder Anschlussklemme (13), während der Bewegungsrichtung des besagten einen Schiebers (30) ausgerichtet wird, orthogonal zur longitudinalen Achse der Form.

2. Die Injektionsform gemäß Anspruch 1 **gekennzeichnet dadurch, dass** jeder fixierte Einsatz der ersten Formhälfte (20) eine radiale innere Menge (23') umfasst, die zu der Höhle der seitlichen Ohrmuscheln oder Anschlussklemmen (13) ausgerichtet ist, und eine radiale Außenmenge (23 ") umfassend einen Formeindruck für eine Endmenge des Gelenkzapfens (15) des Griffes (14).

3. Die Injektionsform gemäß Anspruch 1 **gekennzeichnet dadurch, dass** die erste Formhälfte (20) einen ersten Injektor (25) für das Liefern von geschmolzenem Plastikmaterial in die erste Injektionskammer des Behälters (10) umfasst; und einen zweiten Injektor (26) für das Liefern geschmolzenen Plastikmaterials in die zweite Injektionskammer für den Griff (14).

4. Die Injektionsform gemäß Anspruch 1 **gekennzeichnet dadurch, dass** die erste Formhälfte (20) einen einzelnen Injektor für das Liefern von geschmolzenem Plastikmaterial in die erste und zweite Injektionskammer für den Behälter (10) und den Griff (14) umfasst.

5. Die Injektionsform gemäß Anspruch 1 **gekennzeichnet dadurch, dass** die Hilfsmittel für das Kontrollieren der Bewegungen der Schieber (29, 30) und das Entfernen der zylindrischen Teile (32) für das Formen der Löcher (16) in der seitlichen Ohrmuschel oder Anschlussklemmen (13) seitliche Führungssäulen (34) und/oder hydraulische Aktoren (35) umfassen.

6. Die Injektionsform gemäß Anspruch 1 **gekennzeichnet dadurch, dass** die Hilfsmittel (36, 37, 38) für das Einfügen der Gelenkzapfen (15) des Griffes (14) in die Löcher (16) der seitlichen Ohrmuscheln oder Anschlussklemmen (13) an einem der Schieber (30) befestigt sind, mit einer Position seitlich den zylindrischen Teilen (32).

7. Die Injektionsform gemäß Anspruch 6 **gekennzeichnet dadurch, dass** besagte Hilfsmittel (36, 37, 38) für das Einfügen der Gelenkzapfen (15) in die Löcher (16) der seitlichen Ohrmuscheln oder Anschlussklemmen (13) durch besagten ersten Schieber (30) unterstützt werden, um jeden Gelenkzapfen (15) zwischen einer ersten seitlichen Position und einer zweiten Position axial mit einem korrespondierenden Loch (16) der seitlichen Ohrmuscheln oder Anschlussklemmen (13) für die Bindung mit einem Gelenkzapfen (15) des Griffes (14), zu bewegen.

## Revendications

1. Assemblage de moule à injection convenant à la production d'un récipient (10) de matière plastique, comprenant une paroi inférieure (11') et une paroi périphérique (11) ayant une bande supérieure (12) munie de deux oreilles latérales creuses, ou d'ergots ouverts vers le bas (13), dans des positions diamétralement opposées, chacune desdites oreilles ou chacun desdits ergots (13) ayant une paroi externe avec un orifice (16) pour l'introduction d'une broche pivot (15) d'une poignée (14), le moule comprenant :
un premier demi-moule (20) muni d'une cavité circulaire (22) qui s'étend le long d'un axe longitudinal du moule, ladite cavité (22) se conformant à la paroi inférieure (11") et à la paroi périphérique (11) du récipient (10) ;
un second demi-moule (21), relativement mobile par rapport au demi-moule précédent (20) dans la direction de l'axe longitudinal du moule, entre une position ouverte et une position fermée du moule ;
dans lequel le second demi-moule (21) comprend une âme centrale (28) appropriée pour pénétrer dans la cavité circulaire (22) du premier demi-moule (20) afin de former une première chambre d'injection pour le conteneur (10) ; et des moyens (36, 37, 38) pour assembler la poignée (14) en introduisant automatiquement les broches pivots (15) dans les orifices (16) des oreilles latérales (13), **caractérisé en ce que** l'assemblage comprend :
des premier et second coulisseaux (29, 30), mobiles dans un plan orthogonal à l'axe longitudinal du moule, lesdits coulisseaux (29, 30) ayant des surfaces avant façonnées se conformant à la bande supérieure (12) et aux oreilles latérales ou aux ergots latéraux (13) ;
dans lequel le premier demi-moule (20) et l'un des coulisseaux (30) comprennent des parties pressées opposées (17) définissant une seconde chambre d'injection pour la poignée (14) et les broches pivots (15), aménagées coaxialement par rapport à la première chambre d'injection pour le récipient (10) ;
le premier demi-moule (20) comprend deux éléments rapportés fixes (23) faisant saillie d'une surface évidée (24), dans des positions diamétralement opposées,
chaque élément rapporté (23) coopère avec des cavités façonnées des coulisseaux (29, 30) pour définir des parties pressées de moulage pour les oreilles ou les ergots (13), lesdites parties pressées de moulage étant en communication avec la chambre d'injection pour le récipient (10) ;
**en ce que** l'un des coulisseaux (30), aux deux extrémités de la surface avant, comprend des éléments cylindriques orientés radialement (32) coopérant avec les éléments rapportés fixes (23) du premier demi-moule (20) pour former les orifices (16) pour l'engagement des broches pivots (15) avec les oreilles latérales ou les ergots latéraux (13) ; et
**en ce que** le moule comprend des moyens de commande (34, 35) pour commander le mouvement des coulisseaux (29, 30) et entraîner chacun des éléments cylindriques (32) pour qu'ils soient retirés d'un côté de l'orifice (16) par déformation élastique de la paroi externe de l'oreille ou de l'ergot (13), et pour aligner chaque broche pivot (15) avec l'orifice (16) d'une oreille ou d'un ergot correspondant(e) (13) pendant le déplacement dans la direction dudit un coulisseau (30) orthogonalement à l'axe longitudinal du moule.

2. Moule à injection selon la revendication 1, **caractérisé en ce que** chaque élément rapporté fixe (23) du premier demi-moule (20) comprend une portion radialement interne (23') qui se conforme à la cavité des oreilles latérales ou des ergots latéraux (13) et une portion radialement externe (23") comprenant un partie pressée de moulage pour une portion d'extrémité d'une broche pivot (15) de la poignée (14).

3. Moule à injection selon la revendication 1, **caractérisé en ce que** le premier demi-moule (20) comprend une premier injecteur (25) pour acheminer de la matière plastique fondue dans la première chambre d'injection pour le récipient (10) ; et un second injecteur (26) pour acheminer la matière plastique fondue dans la seconde chambre d'injection pour la poignée (14).

4. Moule à injection selon la revendication 1, **caractérisé en ce que** le premier demi-moule (20) comprend un seul injecteur pour acheminer la matière plastique fondue dans les première et seconde chambres d'injection pour le récipient (10) et la poignée (14).

5. Moule à injection selon la revendication 1, **caractérisé en ce que**, les moyens permettant de commander les mouvements des coulisseaux (29, 30) et le retrait de l'élément cylindrique (32) pour former les orifices (16) dans les oreilles latérales ou les ergots latéraux (13) comprennent des colonnes de guidage inclinées (34) et/ou des actionneurs hydrauliques (35).

6. Moule à injection selon la revendication 1, **caractérisé en ce que** les moyens (36, 37, 38) pour l'insertion des broches pivots (15) de la poignée (14) dans les orifices (16) des oreilles latérales ou des ergots latéraux (13) sont fixés à l'un des coulisseaux (30), dans des positions espacées latéralement des éléments cylindriques (32).

7. Moule à injection selon la revendication 6, **caractérisé en ce que** lesdits moyens (36, 37, 38) pour l'introduction des broches pivots (15) dans les orifices (16) des oreilles latérales ou des ergots latéraux (13) sont supportés par ledit un coulisseau (30) afin de déplacer chaque broche (15) entre une première position latérale et une seconde position alignée axialement avec un orifice correspondant (16) des oreilles ou des ergots correspondants (13) pour l'engagement avec une broche pivot (15) de la poignée (14).
